# EUROPEAN PATENT APPLICATION

(11) **EP 1 000 963 A1**
(43) Date of publication of application: **17.05.2000**
(21) Application number: 98811135.7
(22) Date of filing: 13.11.1998
(51) Int. Cl.: C08J 9/00, C08G 63/91, C08K 5/15, C08L 67/02

(54) **Increasing the melt viscosity of a polyester resin**

(71) Applicant: ECOLE POLYTECHNIQUE FEDERALE DE LAUSANNE, 1015 Lausanne (CH)
(72) Inventor: Manson, Jan-Anders E., 1025 St.-Sulpice (CH); Japon, Sonia, 1008 Prilly (CH); Leterrier, Yves, 1007 Lausanne (CH)
(74) Representative: Ganguillet, Cyril

(57) **Abstract**

The invention relates to a process for increasing the melt viscosities of polyester resins. This process comprises a step of heating the polyester resin in the temperature range comprised between the melting temperature of the polyester resin and the degradation temperature of the polyester resin with the addition of at least one modifier compound which has at least three glycidyl side chains. The improved polyester resins, having such improved properties, are used for the production of polyester foamed materials.

## Description

The invention relates to a process for increasing the melt viscosities of polyester resins and to the polyester resins improved by said process. More specifically, it relates to a process for producing polyester foamed materials and to polyester foamed materials produced by said process.

Polyesters, in particular linear poly(alkylene terephthalate) such as poly(ethylene terephthalate) (PET) and poly(butylene terephthalate) (PBT), are finding increasing use in advanced applications including fibres, containers and structural foams.

In the latter case, when a continuous extrusion process is used, the melt viscosities and, more specifically, the melt strengths of the polymer must be improved to prevent the collapse of the foam structure during the stabilisation phase of the cell growth. Such a material improvement is even more important when recycling bottle-grade poly(ethylene terephthalate) resin due to the viscosity drop resulting from reprocessing.

Foam extrusion imposes in particular considerable extensional deformation in comparison to fibre spinning, thermoforming or film blowing and requires a high and controlled extensional viscosity of the material, through an increase in the melt strength. This in turn is controlled by the weight-average molecular weight (M_{w}) related to the chain length, by the molecular weight distribution (MWD) and by the degree of branching.

To increase melt viscosities of linear polyester resins, solid-state post condensation or recondensation using a chain extender is the most widely-used technique. US 4,434,276 reports such a method for further condensing linear poly(alkylene terephthalate). However, the basic disadvantage of this technique resides in the long reaction period exceeding 5 hours at an elevated temperature approaching the melt temperature of the copolymer, even with the aid of a catalyst.

An alternative cost-effective technique which avoids long thermal cycles is reactive extrusion. By using appropriate reactive agents, polyester resins having apparent viscosities eight-fold increased compared to the untreated resins can be obtained. However, this technique demands tight process control due to competing polycondensation and auto-accelerated degradation and requires the use of catalysts.

A listing of several such reactive agents recently used in the extrusion technique is given by K. C. Khemani in "Extruded polyester foams" in "Polymeric foams", ACS Symposium series, Editor K. C. Khemani, 1997; Vol 669, pp 54-80. For instance, such reactive agents are selected among polyfunctional molecules such as diepoxydes, diisocyanates, dianhydrides, bis(oxazoline)s or triazine derivatives bearing glycidyl groups.

Some of these reactive agents, in particular the triazine derivatives, are supplied as powders. US 4,999,388 reports that these powders may agglomerate into coarse particles and that they are difficult to mix uniformly with the other components during extrusion and may result in flaw sites in formed articles.

One of the aims of the present invention is to provide a low-cost method to increase the melt viscosities, in particular the extensional viscosity, of polyester resins, especially poly(alkylene terephthalate) resin, by carrying out simplified operations in a relatively short period of time.

Another of the aims of the present invention is to provide polyester resins, especially poly(alkylene terephthalate) resins, having increased melt viscosities allowing the resins to be processed in moulding or foaming techniques.

More specifically, one of the aims of the present invention is to provide polyester resins, especially poly(alkylene terephthalate), having in particular a high extensional viscosity, in such a way that, when used in particular in a foaming extrusion process, collapse of the foam structure during the stabilisation phase of the extrusion process is avoided and numerous fine foamed cells having uniform volumes, shapes and distribution are obtained.

Still another of the aims of the present invention is to provide a low cost continuous foaming extrusion process of polyester resins, especially poly(alkylene terephthalate), in the course of which melt viscosities of the polyester resins, in particular an extensional viscosity, are increased.

A further aim of the present invention is to provide polyester foamed materials, especially poly(alkylene terephthalate), having numerous fine foamed cells having uniform volumes, shapes and distribution.

One object of the present invention is a process for increasing the melt viscosities of polyester resins. This process comprises a step of heating a polyester resin in the temperature range comprised between the melting temperature of said polyester resin and the degradation temperature of said polyester resin with the addition of at least one modifier compound which has at least three glycidyl side chains.

Another object of the present invention is an improved polyester resin obtained according to the previous process and having increased melt viscosities.

Still another object of the present invention is a process for producing polyester foamed materials. This process comprises the steps of:
i) heating a polyester resin in the temperature range comprised between the melting temperature of said polyester resin and the degradation temperature of said polyester resin with the addition of at least one modifier compound which has at least three glycidyl side chains, in order to increase the melt viscosities of said polyester resin;
ii) pressurising the obtained improved melt polyester resin with the addition of a blowing agent; and
iii) extruding the obtained mixture to an area of low pressure in order to allow the development of a stable foam structure.

The polyester resins used in the process of this invention are essentially constituted of linear polyesters derived from a dicarboxylic acid component composed mainly of an aromatic dicarboxylic acid and from a diol component composed mainly of an aliphatic or cycloaliphatic diol.

Typical examples of the aromatic acids are terephthalic acid, isophthalic acid, naphthalenedicarboxylic acid, diphenyletherdicarboxylic acid, diphenyldicarboxylic acid, and diphenoxyethanedicarboxylic acid.

Typical examples of the diol include polymethylenediols such as ethylene glycol, trimethylene glycol, tetramethylene glycol and hexamethylene glycol, and cyclohexane dimethylol.

Examples of preferred polyesters that are used in the process of this invention include linear alkylene terephthalate such as poly(ethylene terephthalate) and poly(butylene terephthalate).

The polyester resins used in the process of this invention can be those obtained by recycling polyester plastic materials, in particular. Examples of recycled polyester resins are those obtained by recycling bottles or films.

The intrinsic viscosity of the polyester resins used in the process of this invention, measured at 25°C in phenol/tetrachloroethane, is preferably at least 0.65 dl/g, especially at least 0.7 dl/g and not more than 1 dl/g.

The number-average molecular weight (Mₙ) of the polyester resins used in the process of the invention is preferably comprised between 15'000 g/mol and 40'000 g/mol, more preferably between 18'000 g/mol and 35'000 g/mol.

The weight-average molecular weight (M_{w}) of the polyester resins used in the process of the invention is preferably comprised between 30'000 g/mol and 80'000 g/mol, more preferably between 40'000 g/mol and 70'000 g/mol.

The polydispersity coefficient of the molecular weight distribution (MWD) of the polyester resins used in the process of the invention is preferably less than 3, more preferably less than 2.5.

When recycled polyester resins are used in the process of the invention, they can contain contaminants such as non-polyester polymers. Examples of non-polyester polymer contaminants are polyethylene, polystyrene, poly(vinyl chloride).

The modifier compound used in the process of this invention denotes a compound having at least three glycidyl side chains in the molecule. Preferably, the molecule bears three or four glycidyl side chains, more preferably four.

Preferably, these glycidyl side chains are bounded to the molecule of the modifier compound via a nitrogen atom of an amine bond or via an oxygen atom of an ether bond. The framework of the molecule can be constituted of an aliphatic, a cycloaliphatic, an aromatic, a cycloaliphatic, an araliphatic, or a heterocyclic structure. Appropriate framework of the molecule of the modifier compounds can be selected by those skilled in the art in such a way that these compounds demonstrate a good solubility into the molten phase of the polyester resins. Examples of preferred frameworks are aromatic and araliphatic structures.

Typical examples of these modifier compounds include 4-glycidyloxy-N,N'-diglycidaniline and N,N,N',N'-tetraglycidyldiaminodiphenylmethane.

The modifier compounds, having preferably four glycidyl side chains, are added to the polyester resin in an amount of 0.05 to 5% by weight, preferably of 0.1 to 1% by weight, more preferably of 0.2 to 0.5% by weight, based on the polyester.

The process of this invention is carried out at temperatures comprised between the melting temperature and the degradation temperature of the used polyester resin. Suitable temperatures can be determinated by those skilled in the art. Generally, temperatures not exceeding 310°C are preferred.

The process of this invention is carried out for a period of time that those skilled in the art are able to determinate. Generally, the period of time do not exceed 15 minutes. Preferably, the period of time is less than 10 minutes, more preferably less than 5 minutes.

The process of this invention is carried out in apparatuses commonly used in the extrusion techniques. Examples of such apparatuses are single and twin screw extruders, buss-kneaders and all combined systems such as tandem extruder systems.

Under the heat treatment conditions carried out in the process of this invention, the epoxide function borne on each of the glycidyl side chains of the modifier compounds is able to react, without the need of a catalyst, with an end terminal free carboxylic acid group of one particular polyester, in such a way that the molecule of the modifier compound is bonded to the end terminal of the polyester.

Due to its functionality, the modifier compound has the property to induce branching of the polyester and to promote an increase of the weight-average molecular weight (M_{w}) of the polyester by extending its chain length, while keeping a narrow molecular weight distribution (MWD) of the polyester.

Consequently, the improved polyester resins according to this invention, obtained by applying the process of this invention, have increased melt viscosities compared to those of untreated polyester resins.

The intrinsic viscosity of the improved polyester resins of this invention, measured at 25°C in phenol/tetrachloroethane, is advantageously higher than 0.85 dl/g.

The number-average molecular weight (Mₙ) of the improved polyester resins of the invention is comprised between 28'000 g/mol and 50'000 g/mol.

The weight-average molecular weight (M_{w}) of the improved polyester resins of the invention is higher than 60'000 g/mol, precisely comprised between 60'000 and 180'000 g/mol.

The polydispersity coefficient of the molecular weight distribution (MWD) of the improved polyester resins of the invention remains low. Its value is not more than 4. Advantageously, when the improved polyester resins are used for processing foaming, their distributions are monomodal.

The apparent transient extensional viscosities of this invention, measured according to the method described by C. W. Macosko in "Rheology: Principles, measurements, and applications" in "Advances in interfacial engineering series", VCH Publishers, New York, 1994, are higher than 10⁵ Pa.s.

According to the process of this invention for producing polyester foamed materials, the improved polyester resin, under its molten state, is pressurised with the addition of a blowing agent.

Suitable blowing agents include inert gasses, such as nitrogen and carbon dioxide; hydrocarbons boiling lower than about 40°C, such as propane, butane and pentane; and hydrofluorocarbons such as difluoroethane and hydrochlorofluorocarbon. Preferably, the blowing agent is carbon dioxide which is an environmentally friendly agent.

Suitable temperatures, pressures and periods of time at which the process of this invention for producing polyester foamed materials is carried out can be determinate by those skilled in the art.

In order to more illustrate the nature of the invention and the manner of practising the same, the following Examples are presented and refer to the drawing where:
- figure 1 represents the torque response of polyester resins in the course of three embodiments of the process for increasing its melt viscosities;
- figure 2 represents the torque response of polyester resins in the course of four embodiments of the process for increasing its melt viscosities;
- figure 3 represents the apparent uniaxial extensional viscosity measurements of improved polyester resins obtained in the course of three embodiments of the process for increasing their melt viscosities; and
- figure 4 represents a scanning electron micrograph of a foam structure of a polyester foamed material.

### Experimental procedures: Experimental procedures used in the examples are described in this section.

Intrinsic viscosity (I.V.) was measured at 25°C using 0.5 wt% of polymer dissolved in phenol/tetrachloroethane (60/40) using the Ubbelohde tube technique described in ASTM D 4603-91.

Molecular weight distribution was measured by gel permeation chromatography (Multidetector GPC Waters 150-CV connected to a refractometer coupled to a viscosimeter).

Apparent transient extensional viscosities were measured as described by C. W. Macosko in "Rheology: Principles, measurements, and applications" in "Advances in interfacial engineering series"; VCH Publishers, New York, 1994, by using a pulling system placed at the die exit of the extruder. The pulling system was used to measure the extensional viscosity of the molten fibre.

The reactivity of the modifier compound with poly(ethylene terephthalate) (PET) was studied with a Brabender Plasticorder torque rheometer equipped with two counterrotating screws and a capacity of 50 ml using modifier contents ranging from 0.2 to 0.5 wt% of polymer. PET and the modifier compound were dried in a vacuum oven to reduce the moisture content to less than 50 ppm to avoid hydrolysis of the PET. PET was dried at 150°C during at least 6 hours; the modifier was dried at 40°C during 24h. Samples weighing 62 g were loaded into the mixing chamber of the torque rheometer, and reactive mixing was carried out at 270°C and 40 rpm.

Reactive extrusion experimental conditions were set up in a laboratory twin screw extruder (PRISM TSE 16). The temperature profile of the extruder was set at 220°C at the feeder, 270°C at the centre and 250°C at the die. The residence time was defined by the feeding rate (30±5 seconds). The extruded material was cooled at room temperature and pelletised. A second extrusion of predried material was performed under the same conditions (50 rpm) to increase the reaction time.

Foaming experimental conditions were set up in a high pressure vessel heated at 275°C allowing to simulate extruder conditions. CO₂ was used as the blowing agent and a series of pressures from 50 to 300 bars were applied. The pressure was released after a few minutes and different average pressure release rates were applied from 100 to 450 bars/min. The system was cooled down to 150°C at different rates ranging from 100 to 250°C/min.

### Example 1:

Improvement of rheological properties of a virgin poly(ethylene terephthalate) using as a modifier a compound having four glycidyl side chains and foaming the obtained improved polymer.

### Example 1a

A common bottle-grade PET copolymer available under the brand name Eastman 9921W was used. It is characterised by an intrinsic viscosity (I.V.) of 0.81 dl/g, a weight-average molecular weight (M_{w}^{PET}) of 52'000 g/mol, a number-average molecular weight (Mₙ^{PET}) of 26'000 g/mol and a polydispersity coefficient of the molecular weight distribution (MWD) of 2. The measured carboxyl and hydroxyl contents are 15.3 and 55 µmol/g respectively.

The modifier compound was N,N,N',N'-tetraglycidyldiaminodiphenylmethane available under the brand name Araldite MY 721 with a measured epoxy equivalent weight of 111.6 g/equiv.

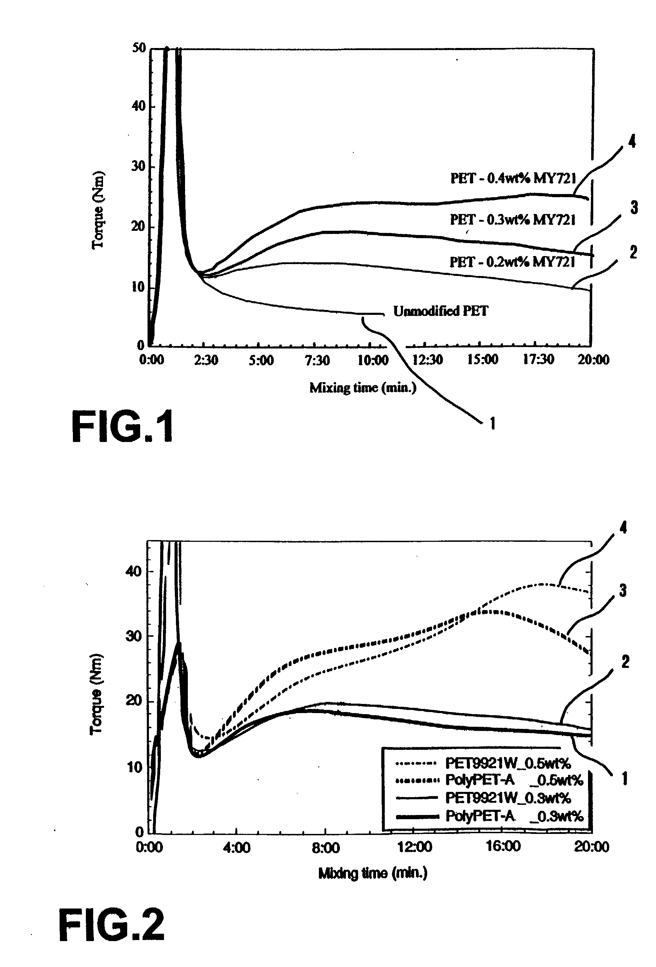

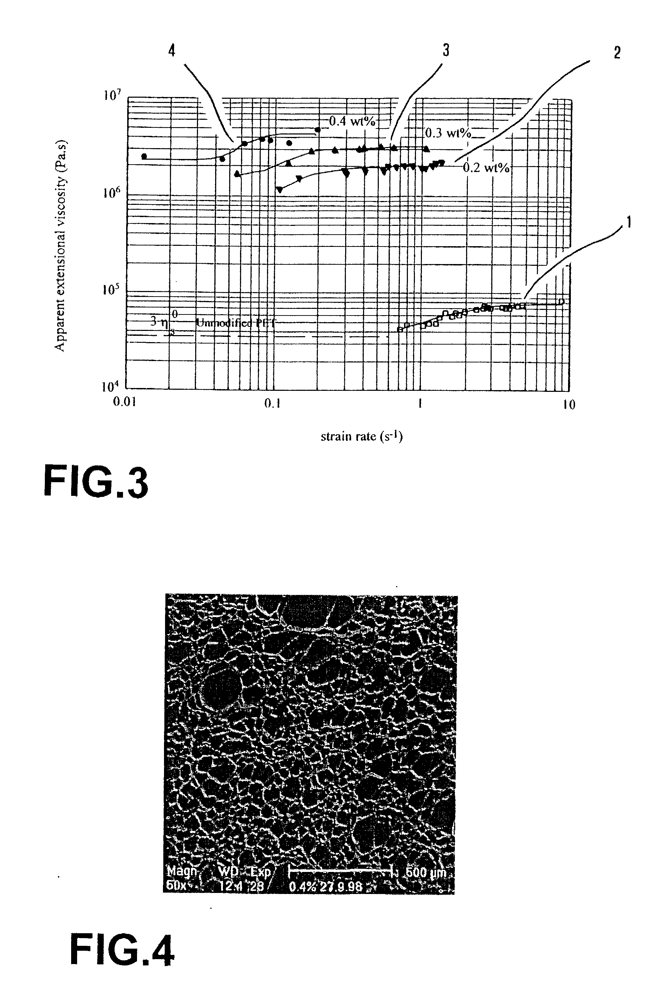

A PET sample weighing 62 g and containing 0.4 wt% of MY721 was loaded into the mixing chamber of the Brabender Plasticorder torque rheometer and the torque response as a function of mixing time was recorded. Curve 1 on figure 1 shows a ten-fold increase of the torque after 8 min. Curve 1 on figure 3 shows an increase of the apparent transient extensional viscosity to a value of 5.10⁶ Pa.s.

After reactive extrusion, the obtained PET has an intrinsic viscosity of 1.06 dl/g. The presence of long-chain branched molecules with a narrow monomodal molecular weight distribution were demonstrated by gel permeation chromatography technique.

The compound was placed into the high pressure vessel and a CO₂ pressure of 300 bars was applied to the molten polymer. The foaming was performed with a pressure release rate of 450 bars/min and a cooling rate of 250°C/min.

As shown in figure 4, a homogeneous closed-cell structure was obtained. The measured apparent density is 92 kg/m³. An average cell size of 70 µm was obtained.

### Example 1b

Example la was repeated using 0.3 wt% of MY721 instead of 0.4 wt%. Curve 3 on figure 1 represents the torque response.

A PET with an intrinsic viscosity of 1.02 dl/g was obtained. The obtained foam has a regular closed-cell structure and an average apparent density of 100 kg/m3.

### Example 1c

Example la was repeated using 0.2 wt% of MY721 instead of 0.4 wt%. Curve 2 on figure 1 represents the torque response.

A PET with an intrinsic viscosity of 0.89 dl/g was obtained. The measured average apparent density of the obtained foam was 200 kg/m3. A regular but partially open-cell structure was obtained.

### Example 1d

Example la was repeated using 100 bars of CO₂ applied to the molten polymer. The average pressure release rate was 100 bars/min. and an average cooling rate of 100°C/min. The measured average apparent density of the obtained foam was 70 kg/m³. An average cell size of 200 µm was obtained.

### Example 2:

Improvement of rheological properties of a recycled poly(ethylene terephthalate) using as a modifier a compound having four glycidyl side chains and foaming the obtained improved polymer.

A recycled PET available under the brand name PolyPET-A40, having an intrisic viscosity of 0.77 dl/g and containing 50 ppm of PVC and 20-30 ppm of PE, which is the lowest quality of PET provided by Poly Recycling Schweiz (PRS), were used.

The reactivity of the modifier compound MY721 with the A40 recycled PET was studied with a Brabender Plasticorder torque rheometer. Two concentrations of 0.3 and 0.5 wt% were tested.

Curve 3 on figure 2 represents the torque response curve of A40 recycled PET with 0.5 wt% of MY721 and curve 1 on figure 2 represents the torque response curve of A40 recycled PET with 0.3 wt% of MY721.

Reactive extrusion was carried out in a twin screw extruder (PRISM TSE 16) with a concentration of 0.3 wt% of modifier A40 recycled PET. The temperature profile of the extruder was set at 220°C at the feeder, 270°C at the centre and 250°C at the die. The residence time was defined by the feeding rate (approximately 40±5 s for recycled PET). The extruded material was cooled at room temperature and pelletised. A second extrusion of predried material was performed under the same conditions (50 rpm) to increase the reaction time.

The obtained PET has an intrinsic viscosity of 0.89 dl/g. A six-fold increase of the extentional viscosity is obtained compared to the unmodified virgin PET.

To study the cell morphology of modified recycled PET foams, free foaming experiments were performed with 0.3 wt% modified PolyPET-A40 extruded. The sample was loaded in an autoclave pressurised with CO₂ at 300 bars and heated to 275°C. The pressure was then released in two steps, from 300 bars down to 60 bars at an average rate of 210 bars/min and from 60 bars to 1 bar at an average rate of 15 bar/min. A homogeneous closed-cell structure was obtained. The measured apparent density is 450 kg/m³ and the average cell size is 105 µm.

### Example 3:

Improvement of rheological properties of a virgin poly(ethylene terephthalate) using as a modifier a compound having three glycidyl side chains.

As in Example 1, a common bottle-grade PET copolymer available under the brand name Eastman 9921W was used.

The modifier compound was 4-glycidyloxy-N,N'-diglycidaniline available under the brand name Araldite MY510 with a measured epoxy equivalent weight of 102.7 g/equiv.

A PET sample weighing 62 g and containing 0.4 wt% of MY510 was loaded into the mixing chamber of the Brabender Plasticorder torque rheometer and the torque response as a function of mixing time was recorded.

An efficient reaction was obtained. A 3-fold increase of the torque was measured at 10 minutes of mixing and a 5-fold increase of the torque was measured at 20 minutes of mixing.

### Example 4: Continuous process for producing a polyester foamed material.

A common bottle-grade poly(ethylene terephthalate) (PET) available under the brand name Eastman 9921W was used. It is characterised by an intrinsic viscosity of 0.81 dl/g, a weight-average molecular weight (M_{w}^{PET}) of 52'000 g/mol.

It was dried at 150°C for 6 hours in a drying tower equipped with a conveyor belt, and directly fed through the main feed hopper of a twin screw extruder having two 34 mm diameter co-rotating, intermeshing twin screws with a L/D ratio of 40. The polymer pellets were fed into the twin screw extruder at a rate of 20 g/min.

An additive liquid feeder was attached to the feed throat of the extruder with a feeding rate of 0.3 wt% of the modifier compound available under the brand name Araldite MY 721. An injection port capable of injecting a blowing agent under high pressure into the polymeric melt was located in the second part of the extruder.

The blowing agent used was CO₂, chosen for its environmentally friendly characteristics, with an injection rate of 1.9 g/min and a pressure of 35 bars. The improved polymer melt and the gas mixture was compressed to 170 bars in the third part of the twin screw extruder. A slit die of 80 mm width was attached at the end of the extruder.

The heating profile of the extruder is noted below:

| | Set | Actual |
|---|---|---|
| Feeding zone 1 | 230°C | 235°C |
| Melt zone 2 | 270°C | 273°C |
| Melt zone 3 | 275°C | 278°C |
| Melt zone 4 | 275°C | 279°C |
| Slit die zone 5 | 260°C | 266°C |
| Slit die zone 6 | 255°C | 261°C |
| Drive conditions | 100 rpm | |

The foam coming out of the slit die was cooled in a water cooled conformer yielding 30 mm thick foamed panels.

A closed cell foamed material was obtained.

This material can be used to manufacture building material such as thermal insulation panels, phonic insulation panels or light weight and stiff element included structural elements such as sandwich panels. It can be used also for the manufacture of furniture, transportation, flooring, appliances, and packages such as food packages.

## Claims

1. A process for increasing the melt viscosities of a polyester resin, comprising a step of heating said polyester resin in the temperature range comprised between the melting temperature of said polyester resin and the degradation temperature of said polyester resin with the addition of at least one modifier compound which has at least three glycidyl side chains.

2. A process according to claim 1, characterised in that said polyester is a poly(alkylene terephthalate).

3. A process according to claim 1, characterised in that said polyester is a recycled polyester.

4. A process according to claim 1, characterised in that said modifier compound has three or four glycidyl side chains in the molecule, said glycidyl side chains being attached to a nitrogen atom of an amine bond or an oxygen atom of an ether bond.

5. A process according to claim 4, characterised in that said modifier compound is selected from the group consisting essentially of 4-glycidyloxy-N,N'-diglycidaniline and N,N,N',N'-tetraglycidyldiaminodiphenylmethane.

6. A polyester resin having increased melt viscosities produced according to the process of claim 1.

7. Use of the polyester resin of claim 6 for the production of a polyester foamed material.

8. A process for producing a polyester foamed material comprising the steps of:
i) heating a polyester resin in the temperature range comprised between the melting temperature of said polyester resin and the degradation temperature of said polyester resin with the addition of at least one modifier compound which has at least three glycidyl side radicals, in order to increase the melt viscosities of said polyester;
ii) pressurising the obtained improved melt polyester resin with the addition of a blowing agent; and
iii) extruding the obtained mixture to an area of low pressure in order to allow the development of a stable foam structure.

9. A polyester foamed material produced according to the process of claim 8.
